# EUROPEAN PATENT SPECIFICATION

(11) **EP 2 515 000 B1**
(45) Date of publication and mention of the grant of the patent: **15.07.2015**
(21) Application number: 11305467.0
(22) Date of filing: 19.04.2011
(51) Int. Cl.: F16H 25/22

(54) **Ball screw assembly with recirculating cap and nut**
Kugelspindelanordnung mit Umlaufdeckel und -mutter
Ensemble formant vis sphérique doté d'un bouchon de recirculation et d'un écrou

(43) Date of publication of application: 24.10.2012
(73) Proprietor: Aktiebolaget SKF, 415 50 Göteborg (SE)
(72) Inventor: Allegri, Eric, 73800, MONTMELIAN (FR); Durand, Christophe, 73000, BASSENS (FR); Dubus, Jérôme, 37520, LA RICHE (FR); Lescorail, Romuald, 37380, SAINT-LAURENT-EN-GÂTINES (FR)
(74) Representative: Casalonga

(56) References cited:
- DE-A1- 3 635 212
- DE-A1-102007 032 012
- JP-A- 2004 162 767
- JP-A- 2004 225 808
- SU-A1- 1 414 988
- US-A- 2 855 792
- US-A1- 2002 028 122

## Description

The present invention relates to ball screw assemblies or devices. The ball screw assemblies may be, for example, used to displace loads by transforming rotary action into linear motion.

A ball screw assembly generally comprises a nut and an elongated cylindrical screw extending through an opening formed through the nut, the outer surface of said screw and the inner surface of said nut being provided with complementary threads. The assembly further comprises a plurality of balls engaged into both of the threads so as to provide a rolling engagement between the screw and the nut.

Patent application US-A1-2010/0170359 discloses such a conventional ball screw assembly which also comprises outer recirculating tubes for the balls. Each recirculating tube is formed by two assembled parts delimiting together deflecting channels and a return channel extending between said channels for the recirculation of the balls. The ball screw assembly further comprises holders to secure the recirculating tubes onto the outer surface of the nut.

With such a design, it is necessary to foresee the assembly of at least three parts in order to form and secure each of the recirculating tube. This leads to a complex structure of the ball screw assembly as well as an increase of the mounting cost.

Otherwise, in case of long nut, the manufacturing process of the recirculating tubes may be difficult and the dimension of the return channels may be not enough precise to achieve a good recirculation of the balls.

One aim of the present invention is to overcome these drawbacks. It is also known by JP 2004-225808 a ball screw assembly according to the preamble of claim 1 comprising a screw, a nut and a cap mounted on the outer surface of said nut and delimiting together with said outer surface a return channel for the balls. The cap is provided with a main body and with protruding parts mounted on said body. The ball screw assembly further comprises additional pick-up means fixed to the nut in order to pick-up or extract the balls from the circulating path provided between the screw and the nut or to reintroduce the balls into said path.

It is a particular object of the present invention to provide a ball screw device which is simple to manufacture and to assemble, economic while guaranteeing a good recirculation of the balls.

According to the invention, the ball screw assembly comprises a screw provided with an outer thread, a nut provided with an inner thread and with first and second holes extending from said inner thread to an outer surface of said nut, a plurality of balls engaged in both of said outer and inner threads, and means for recirculating the balls between the first and second holes of the nut comprising a return channel. The recirculating means comprise a cap mounted on the nut and delimiting together with the outer surface of said nut the return channel, said channel having in cross-section a circular profile adapted to the balls.

The recirculating means comprise deflecting elements mounted into the first and second holes of the nut, each deflecting element being made in one part. The cap is distinct from the deflecting elements and covers said deflecting elements which protrude outwards relative to the outer surface of the nut. The cap comprises recesses provided on an inner surface bearing against the outer surface of the nut and inside which protrude said deflecting elements. Each deflecting element delimits together with the corresponding hole of the nut a deflecting channel connected to the return channel. Each deflecting elements is provided with a pick-up and release lug extending across the gap between the outer thread of the screw and the inner thread of the nut.

In one preferred embodiment, the outer surface of the nut comprises a first groove partly delimiting the return channel. Advantageously, the cap comprises a second groove partly delimiting the return channel and radially facing the first groove. The second groove may be formed from the inner surface of the cap.

The first groove may be formed on the cylindrical outer surface of the nut. In one embodiment, the first groove is machined on the outer surface of the nut. The return channel may extend axially with regard to a longitudinal axis of the screw.

The deflecting elements may protrude radially relative to the outer surface of the nut.

In one embodiment, the cap is screwed onto the nut. The cap may be formed from metal or plastic material.

In another aspect of the invention, a linear actuator comprises a motor and a ball screw assembly as previously defined, the screw of said assembly being connected to the motor.

The present invention and its advantages will be better understood by studying the detailed description of a specific embodiment given by way of non-limiting example and illustrated by the appended drawings on which:
- Figure 1 is an axial section of a ball screw assembly according to an example of the invention,
- Figure 2 is an exploded perspective view of Figure 1,
- Figures 3 and 4 are views in radial section of the assembly on III-III and IV-IV of Figure 1,
- Figure 5 is a perspective view of a nut of the assembly of Figure 1,
- Figure 6 is an under view of an outer cap of the assembly of Figure 1,
- Figure 7 is a view in axial section of the outer cap on VII-VII of Figure 6, and
- Figure 8 is an axial section of a linear actuator according to an example of the invention.

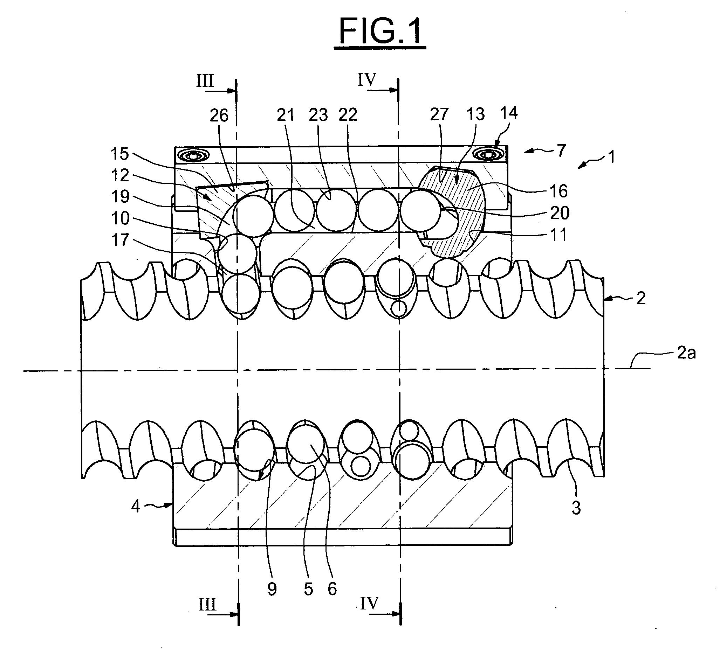

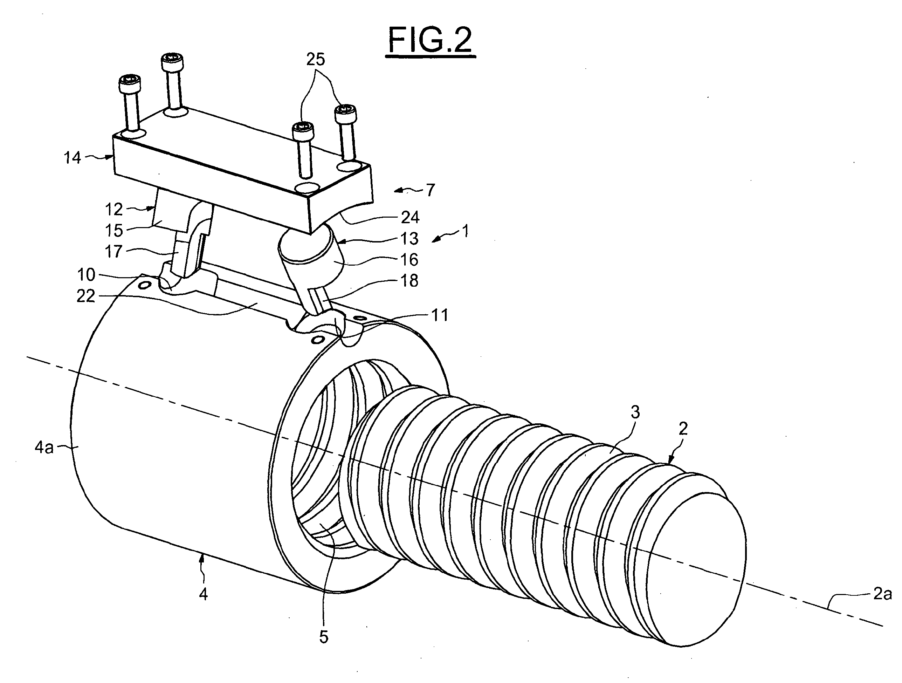

As illustrated on the Figures 1 and 2, which illustrate an embodiment of a ball screw device or assembly 1 according to the invention, the assembly comprises a screw 2 having an outer thread 3, a cylindrical nut 4 having an inner thread 5 whose internal diameter is bigger than the external diameter of the outer thread 3, a plurality of spherical balls 6 for connecting the screw to the nut, and ball recirculating means 7 mounted on the nut. The screw 2 extends along a longitudinal axis 2a through a cylindrical opening of the nut from which is formed the inner thread 5.

Some balls 6 are respectively engaged partly in the outer thread 3 of the screw and partly in the inner thread 5 of the nut. Said balls are engaged on a circulating path 9 of the nut which can be formed along several spires of the inner thread 5. A rotation of the nut 4 relative to the screw 2 is transformed into a longitudinal linear movement along the axis 2a of said screw with respect to the nut because the balls 6 radially disposed therebetween roll along the inner and outer threads 3 and 5 by following the path 9 in the nut. Alternatively, a rotation of the screw 2 relative to the nut 4 causes the translational movement of said nut.

The nut 4 comprises two stepped holes 10, 11 which extend from a cylindrical outer surface 4a of said nut and open into the inner thread 5. The holes 10, 11 extend through the thickness of the nut 4. In the illustrated embodiment, the holes 10, 11 are tilted with respect to a longitudinal plane of the assembly containing the axis 2a in order to be connected tangentially with the inner thread 5 of the nut. The holes 10, 11 extend along two opposite directions.

The recirculating means 7 comprise two deflecting elements or pins 12, 13 mounted into the holes 10, 11 of the nut and an outer cap 14 mounted on the outer surface 4a of said nut.

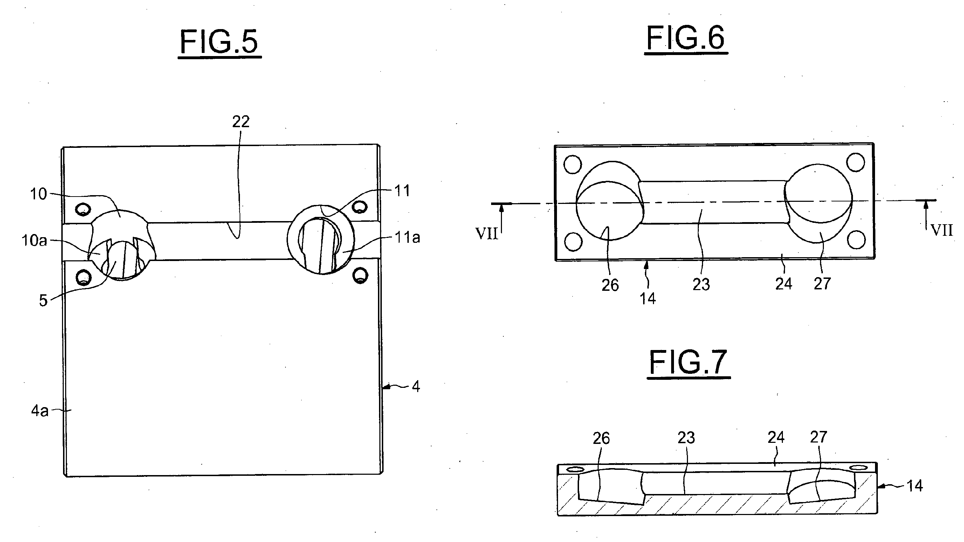

The deflecting pins 12, 13 are identical to one another and separated or distinct from the nut 4. Each deflecting pin 12, 13 is made in one part and may be made from plastic material or metal, for instance by moulding. Each deflecting pin 12, 13 comprises a cylindrical mounting part 15, 16 mounted in the respective stepped hole 10, 11 and a pick-up and release lug 17, 18 extending from a lower surface of said mounting part. The deflecting pins 12, 13 may be mounted into the corresponding stepped holes 10, 11 from the outside of the nut 4, the lower surfaces of the mounting parts 15, 16 abutting against shoulders 10a, 11a (Figure 5) of said holes. The mounting part 15, 16 is located partly inside the corresponding hole 10, 11 and protrudes radially outside relative to the outer surface 4a of the nut.

The pick-up and release lug 17, 18 of each deflecting pin extends radially inwards inside the corresponding hole 10, 11 and across the gap between the outer thread 3 of the screw and the inner thread 5 of the nut. Each lug 17, 18 is mounted into contact with the hole 10, 11 in the circumferential direction and engages into the outer thread 3 of the screw while remaining at a small distance from the flanks of said thread.

Each of the deflecting pin 12, 13 delimits together with the respective hole 10, 11 a deflecting channel 19, 20 for the balls. Each of the mounting parts 15, 16 comprises a curved guiding groove to form with surfaces of the associated hole 10, 11 opposed lateral parts of said channel. For each deflecting channel 19 and 20, a first end is formed by the free end of the lug 17, 18 inserted into the outer thread 3 of the screw, the second end being delimited by the curved groove of the mounting part 15, 16 and the associated hole 10, 11. The first end of each deflecting channel 19, 20 is tangent to the outer thread 3 of the screw and to the balls 6. The first end of each deflecting channel 19, 20 is connected to one end of the circulating path 9 provided between the screw 2 and the nut 4. At one end of the circulating path 9, the balls 6 meet the lug of one of the deflecting pins 12, 13 and are pick-up or extracted from the circulating path and deviated toward the corresponding deflecting channel 19, 20. At the other end of the circulating path 9, the lug of the other deflecting pin 12, 13 reintroduces or releases the balls 6. Each ball 6 makes at least 180° trajectory when passing through the deflecting pins 12 and 13.

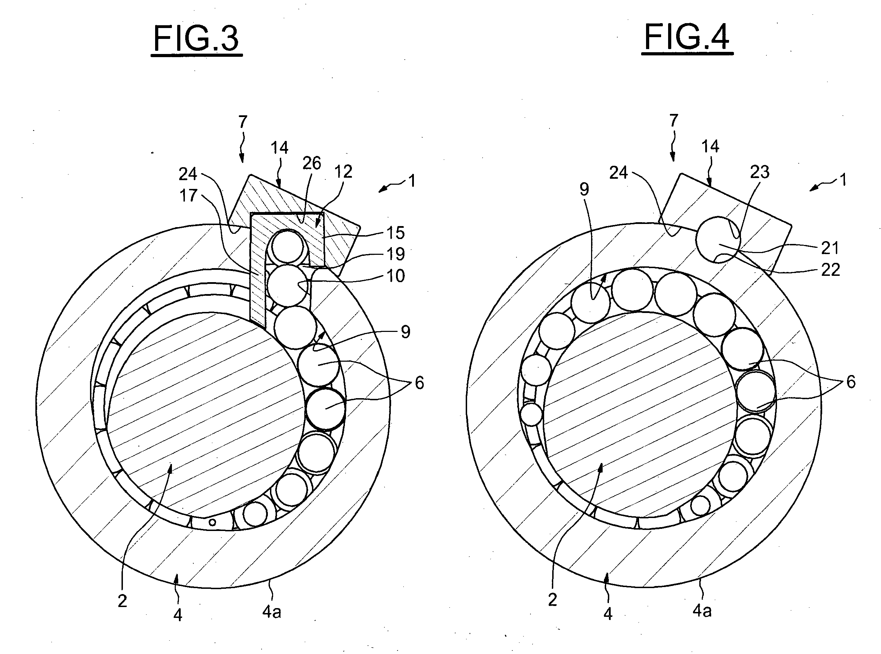

As shown on Figures 1 and 4, the cap 14 delimits together with the outer surface 4a of the nut a straight return channel 21. The return channel 21 is aligned and connected with the second end of the deflecting channels 19, 20. The return channel 21 is connected to the deflecting channels 19, 20 and extends therebetween. The curved deflecting channels 19, 20 and the straight return channel 21 define a recirculation channel for the balls 6 extending from one end to the other end of the circulating path 9 provided between the screw 2 and the nut 4. In the illustrated embodiment, the return channel 21 extends axially with regard to the axis 2a of the screw and lies along the longitudinal plane of the assembly containing said axis.

The return channel 21 is delimited by grooves 22, 23 respectively provided on the outer surface 4a of the nut and on the outer cap 14. The groove 22 extends axially onto the outer surface 4a of the nut and passes through the holes 10, 11. The groove 22 has in cross-section a concave internal profile in the shape of a semi-circle adapted to the dimension of the balls 6. The groove 22 is directed radially outwards and forms a longitudinal straight track or raceway for the balls 6. Advantageously, the radius of curvature of the groove 22 is slightly greater than the radius of the balls 6. For instance, the groove 22 may be formed by machining the entire length of the outer surface 4a of the nut, for example by milling, and then ground and optionally lapped in order to give to said groove forming a raceway for the balls its geometric characteristics and its final surface finish.

The cap 14 is separated or distinct from the nut 4 and from the deflecting pins 12, 13. The cap may be made from metal for example by machining with removal of material from metal bar stock. Alternatively, the cap 14 may be made from plastic material and obtained by moulding. The outer cap 14 is secured on the outer surface 4a of the nut by screws 25. The fixation of the cap 14 on the nut 4 may be obtained by any other suitable fixing means, for example by gluing.

The outer cap 14 has a parallelepiped form and entirely recovers the outer groove 22 of the nut. The cap 14 comprises a concave inner surface 24 radially bearing against the outer surface 4a of the nut and having a complementary shape. The groove 23 is provided on the inner surface 24 and radially faces the groove 22 of the nut. The groove 23 extends axially along the inner surface 24. The groove 23 has in cross-section a concave internal profile in the shape of a semi-circle adapted to the balls 6. The radii of curvature of the grooves 22, 23 are equal. The groove 23 is directed radially inwards and forms a longitudinal straight track or raceway for the balls 6. The groove 23 forming a concave raceway delimits together with the groove 22 of the nut also forming a concave raceway the straight return channel 21. Said channel has in cross-section a circular profile adapted to the balls 6. The radius of the circle is advantageously greater than the radius of the balls 6.

By providing a return channel 21 radially between the nut 4 and the outer cap 14, the recirculation of the balls 6 is achieved in a simple, precise and economic way even in case of axial long nut. Besides, with the shape in cross-section of the return channel 21, each ball 6 positioned between the grooves 22, 23 has a single contact point with said return channel. Therefore, there is less friction when the balls 6 run freely along the return channel 21 and the generation of noise is limited.

As clearly shown on Figures 6 and 7, the cap 14 also comprises two recesses 26, 27 provided on the inner surface 24, each recess being disposed and communicating with one end of the groove 23. Each recess is adapted to receive the portion of the mounting part 15, 16 of the deflecting pin which protrudes outwards relative to the outer surface 4a of the nut and has a complementary shape. The cap 14 enables to avoid an escape of the deflecting pins 12, 13 radially outside of the nut.

In the illustrated embodiment, the cap 14 recovers radially the deflecting pins 12, 13. Alternatively, in a non-claimed embodiment, it could be possible to foresee a cap with a reduced axial dimension and which extends axially between said deflecting pins. In this case, it is necessary to foresee fixing means for fixing the deflecting pins 12, 13 in the holes 10, 11 for example by gluing, screwing, clipping, etc. Otherwise, in the illustrated embodiment, the groove 23 is provided on the cap 14 to form the concave raceway for the balls. Alternatively, it might also be possible to foresee a cap having a semi-tubular shape in order to form a concave raceway for the balls.

In another variant, it could also be possible to have more pairs of holes and associated deflecting pins on the nut cooperating with the return channel. Alternatively, it could again be possible to have a straight return channel extending along an axis not disposed into the longitudinal plane of the ball screw assembly containing the axis of the screw.

In the illustrated embodiment, each deflecting pin delimits together with surfaces of the associated hole a deflecting channel for the balls. Alternatively, in a non-claimed embodiment, it might also be possible to foresee deflecting channel entirely formed by the deflecting pins.

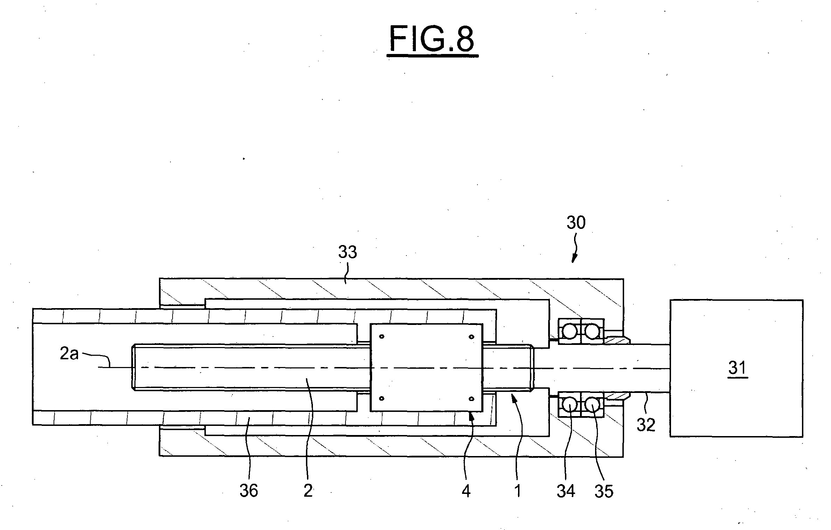

Referring to Figure 8, it will be now described a specific application of the ball screw assembly 1 into a linear actuator. The actuator 30 comprises a driving motor 31 having an output shaft 32 connected by suitable means (not shown) to the screw 2 of the assembly. The shaft 32 and the screw 2 are mounted into a housing 33 of the actuator by two rolling bearings 34, 35, the nut 4 of the assembly carrying a tubular sleeve 36 which may be used to displace loads. When the shaft 32 and the screw 2 rotate, the sleeve 36 translates along the axis 2a.

## Claims

1. Ball screw assembly comprising a screw (2) provided with an outer thread (3), a nut (4) provided with an inner thread (5) and with first and second holes (10, 11) extending from said inner thread to an outer surface (4a) of said nut, a plurality of balls (6) engaged in both of said outer and inner threads, and means (7) for recirculating the balls between the first and second holes of the nut comprising a return channel (21), the recirculating means comprising a cap (14) mounted on the nut and delimiting together with the outer surface (4a) of said nut the return channel (21), said return channel (21) having in cross-section a circular profile adapted to the balls, and deflecting elements (12, 13) mounted into the first and second holes (10, 11) of the nut, each deflecting element being made in one part, the cap (14) being distinct from the deflecting elements (12, 13) and covering said deflecting elements which protrude outwards relative to the outer surface (4a) of the nut, said cap comprising recesses (26, 27) provided on an inner surface (24) bearing against the outer surface of the nut and inside which protrude said deflecting elements, each deflecting element (12, 13) delimiting together with the corresponding hole (10, 11) of the nut a deflecting channel (19, 20) connected to the return channel (21), **characterized in that** each deflecting element (12, 13) is provided with a pick-up and release lug (17, 18) extending across the gap between the outer thread (3) of the screw (2) and the inner thread (5) of the nut (4).

2. Ball screw assembly according to claim 1, wherein the outer surface (4a) of the nut comprises a first groove (22) partly delimiting the return channel,

3. Ball screw assembly according to claim 2, wherein the cap comprises a second groove (23) partly delimiting the return channel and radially facing the first groove.

4. Ball screw assembly according to claim 3, wherein the second groove (23) is formed from the inner surface (24) of the cap.

5. Ball screw assembly according to any of the preceding claims 2 to 4, wherein the first groove (22) is formed on the cylindrical outer surface (4a) of the nut.

6. Ball screw assembly according to any of the preceding claims 2 to 5, wherein the first groove (22) is machined on the outer surface (4a) of the nut.

7. Ball screw assembly according to any of the preceding claims, wherein the return channel (21) extends axially with regard to a longitudinal axis (2a) of the screw.

8. Ball screw assembly according to any of the preceding claims, wherein the deflecting elements (12, 13) protrude radially relative to the outer surface (4a) of the nut.

9. Ball screw assembly according to any of the preceding claims, wherein the cap (14) is screwed onto the nut (4).

10. Ball screw assembly according to any of the preceding claims, wherein the cap is formed from metal or plastic material.

11. Linear actuator comprising a motor and a ball screw assembly according to any of the preceding claims, the screw of said assembly being connected to the motor.

## Patentansprüche

1. Kugelgewindeanordnung, umfassend eine Spindel (2), die mit einem Außengewinde versehen ist, eine Mutter (4), die mit einem Innengewinde (5) und mit einem ersten und einem zweiten Loch (10, 11) versehen ist, die sich von dem Innengewinde zu einer Außenfläche (4a) der Mutter erstrecken, mehrere Kugeln (6), die sowohl in dem Außen- als auch in dem Innengewinde in Eingriff stehen, und Mittel (7) zum Rezirkulieren der Kugeln zwischen dem ersten und dem zweiten Loch der Mutter, die einen Rückführkanal (21) umfassen, wobei die Rezirkulierungsmittel einen Deckel (14) umfassen, der an der Mutter montiert ist und zusammen mit der Außenfläche (4a) der Mutter den Rückführkanal (21) begrenzt, wobei der Rückführkanal (21) im Querschnitt ein kreisförmiges Profil hat, das an die Kugeln angepasst ist, sowie Ablenkelemente (12, 13), die im ersten und zweiten Loch (10, 11) der Mutter montiert sind, wobei jedes Ablenkelement einteilig hergestellt ist, wobei der Deckel (14) von den Ablenkelementen (12, 13) separat ist und die Ablenkelemente abdeckt, die bezüglich der Außenfläche (4a) der Mutter nach außen vorragen, wobei der Deckel Aussparungen (26, 27) umfasst, die an einer an der Außenfläche der Mutter anliegenden Innenfläche (24) vorgesehen sind und in denen die Ablenkelemente vorragen, wobei jedes Ablenkelement (12, 13) zusammen mit dem entsprechenden Loch (10, 11) der Mutter einen mit dem Rückführkanal (21) verbundenen Ablenkkanal (19, 20) begrenzt, **dadurch gekennzeichnet, dass** jedes Ablenkelement (12, 13) mit einer Mitnehmerund Freigabenase (17, 18) versehen ist, die sich über den Spalt zwischen dem Außengewinde (3) der Spindel (2) und dem Innengewinde (5) der Mutter (4) erstreckt.

2. Kugelgewindeanordnung nach Anspruch 1, wobei die Außenfläche (4a) der Mutter eine erste Nut (22) umfasst, die den Rückführkanal teilweise begrenzt.

3. Kugelgewindeanordnung nach Anspruch 2, wobei der Deckel eine zweite Nut (23) umfasst, die den Rückführkanal teilweise begrenzt und der ersten Nut radial gegenüberliegt.

4. Kugelgewindeanordnung nach Anspruch 3, wobei die zweite Nut (23) von der Innenfläche (24) des Deckels gebildet ist.

5. Kugelgewindeanordnung nach einem der vorhergehenden Ansprüche 2 bis 4, wobei die erste Nut (22) an der zylindrischen Außenfläche (4a) der Mutter gebildet ist.

6. Kugelgewindeanordnung nach einem der vorhergehenden Ansprüche 2 bis 5, wobei die Außenfläche (4a) der Mutter zur Bildung der ersten Nut (22) maschinell bearbeitet ist.

7. Kugelgewindeanordnung nach einem der vorhergehenden Ansprüche, wobei sich der Rückführkanal (21) axial bezüglich einer Längsachse (2a) der Spindel erstreckt.

8. Kugelgewindeanordnung nach einem der vorhergehenden Ansprüche, wobei die Ablenkelemente (12, 13) bezüglich der Außenfläche (4a) der Mutter radial vorragen.

9. Kugelgewindeanordnung nach einem der vorhergehenden Ansprüche, wobei der Deckel (14) auf die Mutter (4) aufgeschraubt ist.

10. Kugelgewindeanordnung nach einem der vorhergehenden Ansprüche, wobei der Deckel aus Metall oder Kunststoffmaterial gebildet ist.

11. Linearaktuator, umfassend einen Motor und eine Kugelgewindeanordnung nach einem der vorhergehenden Ansprüche, wobei die Spindel der Anordnung mit dem Motor verbunden ist.

## Revendications

1. Ensemble de vis à billes comprenant une vis (2) pourvue d'un filetage extérieur (3), un écrou (4) pourvu d'un filetage intérieur (5) et de premier et deuxième trous (10, 11) s'étendant dudit filetage intérieur jusqu'à une surface extérieure (4a) dudit écrou, une pluralité de billes (6) engagées dans les deux filetages, extérieur et intérieur, et des moyens (7) de recirculation des billes entre les premier et deuxième trous de l'écrou comprenant un canal de retour (21), le moyen de recirculation comprenant un capot (14) monté sur l'écrou et délimitant avec la surface extérieure (4a) dudit écrou le canal de retour (21), ledit canal de retour (21) ayant en section transversale un profil circulaire adapté aux billes, et des éléments de déviation (12, 13) montés dans les premier et deuxième trous (10, 11) de l'écrou, chaque élément de déviation étant réalisé en seule une pièce, le capot (14) étant distinct des éléments de déviation (12, 13) et couvrant lesdits éléments de déviation qui font saillie vers l'extérieur par rapport à la surface extérieure (4a) de l'écrou, ledit capot comprenant des évidements (26, 27) prévus sur une surface intérieure (24) qui prend appui sur la surface extérieure de l'écrou et à l'intérieur desquels font saillie lesdits élément de déviation, chaque élément de déviation (12, 13) délimitant avec le trou correspondant (10, 11) de l'écrou un canal de déviation (19, 20) relié au canal de retour (21), **caractérisé en ce que** chaque élément de déviation (12, 13) est pourvu d'une patte de préhension et de libération (17, 18) qui s'étend à travers l'espace situé entre le filetage extérieur (3) de la vis (2) et le filetage intérieur (5) de l'écrou (4).

2. Ensemble de vis à billes selon la revendication 1, dans lequel la surface extérieure (4a) de l'écrou comprend une première rainure (22) qui délimite en partie le canal de retour.

3. Ensemble de vis à billes selon la revendication 2, dans lequel le capot comprend une deuxième rainure (23) qui délimite en partie le canal de retour et qui est située radialement en face de la première rainure.

4. Ensemble de vis à billes selon la revendication 3, dans lequel la deuxième rainure (23) est formée depuis la surface intérieure (24) du capot.

5. Ensemble de vis à billes selon l'une quelconque des revendications 2 à 4, dans lequel la première rainure (22) est formée sur la surface extérieure cylindrique (4a) de l'écrou.

6. Ensemble de vis à billes selon l'une quelconque des revendications 2 à 5, dans lequel la première rainure (22) est usinée sur la surface extérieure (4a) de l'écrou.

7. Ensemble de vis à billes selon l'une quelconque des revendications précédentes, dans lequel le canal de retour (21) s'étend axialement par rapport à un axe longitudinal (2a) de la vis.

8. Ensemble de vis à billes selon l'une quelconque des revendications précédentes, dans lequel les éléments de déviation (12, 13) font saillie radialement par rapport à la surface extérieure (4a) de l'écrou.

9. Ensemble de vis à billes selon l'une quelconque des revendications précédentes, dans lequel le capot (14) est vissé sur l'écrou (4).

10. Ensemble de vis à billes selon l'une quelconque des revendications précédentes, dans lequel le capot est en métal ou en matière plastique.

11. Actionneur linéaire comprenant un moteur et un ensemble de vis à billes selon l'une quelconque des revendications précédentes, la vis dudit ensemble étant connectée au moteur.
